# EUROPÄISCHE PATENTANMELDUNG

(11) **EP 1 761 081 A1**
(43) Veröffentlichungstag der Anmeldung: **07.03.2007**
(21) Anmeldenummer: 05018954.7
(22) Anmeldetag: 31.08.2005
(51) Int. Cl.: H04Q 7/22

(54) **Kommunikationssystem, Vermittlungsknoten-Rechner und Verfahren zur Bestimmung eines Kontrollknotens**

(71) Anmelder: SIEMENS AKTIENGESELLSCHAFT, 80333 München (DE)
(72) Erfinder: Belling, Thomas, Dr., 81477 München (DE); Schramm, Mirko, 13187 Berlin (DE)

(57) **Zusammenfassung**

Kommunikationssystem, Vermittlungsknoten-Rechner und Verfahren zum Verarbeiten einer Nachricht

Es wird ein Kommunikationssystem (1) beschrieben, mit
- einem ersten Kommunikationsnetz (10),
- einem zweiten Kommunikationsnetz (20) mit zumindest einem Kommunikationsendgerät (UE),
- einem Schnittstellenrechner (11), der mit dem ersten Kommunikationsnetz (10) gekoppelt ist zum Abbilden eines Datenstroms zwischen dem zumindest einen Kommunikationsendgerät (UE) und dem ersten Kommunikationsnetz (10),
- zumindest einem Kontrollknoten (KK) in dem ersten Kommunikationsnetz (10) zur Kontrolle des zwischen dem Schnittstellenrechner (11) und dem Kommunikationsendgerät (UE) auftretenden Datenstroms,
- zumindest einem Netzwerkknoten (AF, GGSN), welcher dem Kontrollknoten (KK) zur Durchführung dessen Kontrollfunktion, das Kommunikationsendgerät (UE) betreffende, Informationen bereitstellt, und
- zumindest einem Vermittlungsknoten (VK), welcher den für ein betreffendes Kommunikationsendgerät (UE) zugeordneten Kontrollknoten (KK) bestimmt, so dass die von dem zumindest einen Netzwerkknoten (AF, GGSN) bereitgestellten Informationen an diesen Kontrollknoten (KK) übermittelbar sind.

## Beschreibung

Die Erfindung betrifft ein Kommunikationssystem mit einem ersten Kommunikationsnetz und einem zweiten Kommunikationsnetz mit zumindest einem Kommunikationsendgerät, einem Schnittstellenrechner, der mit dem ersten Kommunikationsnetz gekoppelt ist zum Abbilden eines Datenstroms zwischen dem zumindest einen Kommunikationsendgerät und dem ersten Kommunikationsnetz sowie zumindest einem Kontrollknoten in dem ersten Kommunikationsnetz zur Kontrolle des zwischen dem Schnittstellenrechner und dem Kommunikationsendgerät auftretenden Datenstroms. Die Erfindung betrifft weiter einen Vermittlungsknoten-Rechner sowie ein Verfahren zum Verarbeiten einer Nachricht.

In der 3GPP (3rd Generation Partnership Project) ist zur Dienst-abhängigen Autorisierung des Aufbaus von IP (Internet Protocol)-Nutzverbindungen über das Paket-orientierte so genannte "General Packet Radio Service" (GPRS) Mobilfunknetz die so genannte "Service Based Local Policy" (SBLP) in TS 23.207 sowie TS 29.207 und TS 29.208 standardisiert. Die GPRS Nutzverbindungen werden auch als "Packet Data Protocol" Kontexte (PDP Kontexte) bezeichnet. Der von einem mobilen Kommunikationsendgerät, auch als "User Equipment" bezeichnet, angestoßene Aufbau und die Modifikation von PDP Kontexten wird an einem Schnittstellenrechner, dem so genannten "Gateway GPRS Support Node" (GGSN), über die Go Schnittstelle von einer so genannten "Policy Decision Function" (PDF) autorisiert, die die von dem Kommunikationsendgerät gegenwärtig genutzten Dienste kennt. Die PDF wird über diese Dienste über die so genannte Gq Schnittstelle von einer Applikationsfunktion ("Appliction Function") informiert, welche durch einen Netzwerkknoten in dem Kommunikationssystem ausgebildet ist, und die mit dem Kommunikationsendgerät zur Aushandlung des Dienstes eine Signalisierung austauscht. Dies kann beispielsweise unter Verwendung des "IP Multimedia Subsystem" (IMS) der 3GPP genutzten Session Initiation Protocol (SIP) erfolgen, welches in IETF RFC 3261 spezifiziert ist. Die Autorisierung legt zum Beispiel die für den PDP Kontext erlaubte, "Quality of Service" (QoS) fest, d.h. die Bandbreite sowie mittels einer QoS-Klasse auch die erlaubte Verzögerung der im Rahmen einer Datenübertragung ausgetauschten Datenpakete.

In der 3GPP ist auch das so genannte "Flow Based Charging" (FBC) in TS 23.125 sowie TS 29.210 und TS 29.211 standardisiert. Bei FBC werden "Charging Rules" von einer "Charging Rules Function" (CRF) über die Gx Schnittstelle am GGSN für bestimmte PDP Kontexte installiert. Die Charging Rules beschreiben IP-Datenströme sowie für sie anzuwendende Regeln zur Verrechnung von Gebühren. Die CRF wählt die Charging Rules unter Berücksichtigung von gegenwärtig von dem Kommunikationsendgerät genutzten Diensten aus, über die sie von einer oder mehreren Applikationsfunktionen (AF) über die Rx Schnittstelle informiert wird.

In der 3GPP wird für Rel-7 in TR 23.803 die Verschmelzung der SBLP und FBC Funktionalitäten untersucht, wobei PDF und CRF zur so genannten "Policy Control and Charging Rules Function" (PCRF) vereint werden.

Sowohl im Falle von SBLP wie im Falle von FBC wird also ein Kontrollknoten (PDF bzw. CRF oder in Rel-7 PCRF) des Kommunikationssystems von einer oder mehreren Applikationsfunktionen mit Informationen über den oder die genützten Dienste versorgt. Der Kontrollknoten nutzt diese Information, um das Verhalten des GGSN bezüglich der Behandlung des oder der PDP Kontexte zum betreffenden Kommunikationsendgerät und der darin transportierten Daten zu beeinflussen. Die Applikationsfunktion baut die Verbindung zu dem für das Kommunikationsendgerät (z.B. ein Mobilfunkendgerät) zuständigen Kontrollknoten auf. Dienste, die demselben Kommunikationsendgerät von verschiedenen Applikationsfunktionen zur Verfügung gestellt werden, können dieselben PDP Kontexte zum Transport nutzen.

Aus diesem Grund ist es erforderlich, dass genau ein Kontrollknoten für ein Kommunikationsendgerät zuständig ist, und dieser von allen Applikationsfunktionen, die diesem Kommunikationsendgerät Dienste zur Verfügung stellen, über diese Dienste informiert wird.

Gemäß dem bestehenden Standard ist es Aufgabe einer Applikationsfunktion, den für ein Kommunikationsendgerät zuständigen Kontrollknoten zu kontaktieren. Das Kommunikationsendgerät wird hierbei, z.B. durch seine IP Adresse, identifiziert. Im Falle von IP Version 6 sind hierfür nur die vorderen 64 Bit der IP Adresse relevant. Alternativ kann auch ein anderer Identifikator des Kommunikationsendgeräts, wie beispielsweise die so genannte "International Mobile Subscriber Identity" (IMSI) oder die so genannte "Mobile Station International ISDN Number" (MSISDN) verwendet werden, wenn die Applikationsfunktion diesen Identifikator kennt.

Für den Fall, dass mehrere Kontrollknoten in einem Kommunikationsnetz vorhanden sind, ist es bekannt, dass in den Applikationsfunktionen eine konfigurierte Tabelle gespeichert wird, die angibt, welcher Kontrollknoten für welches Kommunikationsendgerät zuständig ist. Allerdings führt dieses Vorgehen zu erheblichen Nachteilen: Die Konfiguration dieser Tabelle bedeutet für den Betreiber des Kommunikationsnetzes einen erheblichen Aufwand, insbesondere wenn die Konfiguration in vielen Applikationsfunktionen in dem Kommunikationsnetz erfolgen muss, oder wenn die Applikationsfunktionen und die Kontrollknoten von verschiedenen Netzwerkbetreibern verwaltet werden. Darüber hinaus ist es kaum möglich, kurzfristig die einem Kontrollknoten zugewiesenen Kommunikationsendgeräte zu ändern, beispielsweise um einen ausgefallenen Kontrollknoten zu ersetzen, oder um dynamisch die Last zwischen mehreren Kontrollknoten zu verteilen.

Für die Schnittstelle zwischen der Applikationsfunktion und dem Kontrollknoten (entweder der Gq oder Rx Schnittstelle) wird gemäß bestehendem Standard das so genannte "Diameter Protokoll", das in IETF RFC 3588 spezifiziert ist, verwendet. Dabei bildet die Applikationsfunktion die Rolle eines "Diameter Clients" und der Kontrollknoten die Rolle eines "Diameter Servers" aus. Das Diameter Protokoll definiert auch so genannte "Relay Agents", die Diameter Nachrichten zwischen Diameter Client und Diameter Server weiterreichen.

Diese auch als Diameter Agents bezeichneten Relay Agents benutzen gemäß dem Standard zwei Verfahren, um beim Weiterreichen von so genannten "Requests" oder Anfrage-Nachrichten das nächste Ziel zu ermitteln:

Wenn eine Diameter Anfrage-Nachricht einen Diameter-Knoten als Ziel ("Destination-Host") enthält, der dem Diameter Agent direkt bekannt ist, reicht der Diameter Agent die Nachricht direkt an diesen Zielknoten weiter. Dies wird als Diameter "Request Forwarding" bezeichnet. Die Kenntnis über den Zielknoten kann der Diameter Agent entweder mittels einer so genannten "Peer Discovery" Prozedur oder durch Konfiguration erhalten.

Wenn dagegen dem Diameter Agent der Zielknoten nicht bekannt ist oder aber kein Zielknoten angegeben ist, ermittelt der Diameter Agent das Ziel der Nachricht mittels einer in der Anfrage-Nachricht angegebenen, so genanten "Realm" sowie einem in dieser Nachricht enthaltenen Kennzeichner, dem so genannten "Application Identifier". Dieses Vorgehen wird als Diameter "Request Routing" bezeichnet. Die Realm gibt einen Bereich des zum Transport verwendeten IP Netzes (beispielsweise den Netzteil eines einzelnen Netwerkbetreibers) an, in dem sich der Diameter Server, d.h. der Kontrollknoten, befinden soll. Befindet sich der Diameter Agent nicht in der angegebenen Realm, so reicht er die Nachricht an einen Diameter Agent in der angegebenen Realm weiter.

Der Kennzeichner ("Application Identifier") bezeichnet die Diameter Applikation, die von dem Diameter Server, d.h. dem Kontrollknoten, zur Verfügung gestellt werden muss. Befindet sich der Diameter Agent in der angegebenen Realm, so reicht er die Nachricht an einen Diameter Server weiter, der die angegebene Diameter Applikation unterstützt.

Wenn eine Applikationsfunktion somit keinen Diameter Zielknoten in einer Diameter Anfrage-Nachricht angibt, wird diese Anfrage-Nachricht mittels Diameter "Request Routing" an einen beliebigen Kontrollknoten der angegebenen Realm gesendet, der die entsprechende Diameter Applikation unterstützt. Es ist somit nicht sichergestellt, dass alle ein bestimmtes Kommunikationsendgerät betreffenden Nachrichten zu demselben Kontrollknoten gesendet werden.

Es ist daher Aufgabe der vorliegenden Erfindung, ein Kommunikationssystem und ein Verfahren zum betreiben eines Kommunikationssystems anzugeben, bei welchem die oben beschriebenen Nachteile vermeidbar sind.

Diese Aufgaben werden durch ein Kommunikationssystem gemäß den Merkmalen des Patentanspruchs 1, einen Vermittlungsknoten-Rechner gemäß den Merkmalen des Patentanspruchs 28 und ein Verfahren gemäß den Merkmalen des Patentanspruchs 29 gelöst.

Das erfindungsgemäße Kommunikationssystem weist ein erstes Kommunikationsnetz sowie ein zweites Kommunikationsnetz mit zumindest einem Kommunikationsendgerät auf. Es ist ein Schnittstellenrechner vorgesehen, der mit dem ersten Kommunikationsnetz gekoppelt ist zum Abbilden eines Datenstroms zwischen dem zumindest einen Kommunikationsendgerät und dem ersten Kommunikationsnetz. Es ist zumindest ein Kontrollknoten in dem ersten Kommunikationsnetz zur Kontrolle des zwischen dem Schnittstellenrechner und dem Kommunikationsendgerät auftretenden Datenstroms vorgesehen. Ein Netzwerkknoten stellt dem Kontrollknoten zur Durchführung dessen Kontrollfunktion, das Kommunikationsendgerät betreffende, Informationen bereit. Schließlich ist ein Vermittlungsknoten vorgesehen, welcher den für ein betreffendes Kommunikationsendgerät zugeordneten Kontrollknoten bestimmt, so dass die von dem zumindest einen Netzwerkknoten bereitgestellten Informationen an diesen Kontrollknoten übermittelbar sind.

Bei dem ersten Kommunikationsnetz kann es sich um ein von einem Betreiber verwaltetes und betriebenes Kommunikationsnetz handeln, das beispielsweise Bestandteil des Internets ist. Die von dem zumindest einem Netzwerkknoten dem Kontrollknoten bereitgestellten Informationen, welche das Kommunikationsendgerät betreffen, sind Informationen über die von dem Kommunikationsendgerät genutzten Dienste.

Durch das Vorsehen eines Vermittlungsknotens, welcher den für ein betreffendes Kommunikationsendgerät zugeordneten Kontrollknoten bestimmt, ist es möglich, dass der Kontrollknoten alle Dienstinformationen von einem oder auch mehreren Netzwerkknoten erhält, welche dem Kommunikationsendgerät Dienste zur Verfügung stellen. Dabei sind weder in dem Kontrollknoten noch in den Netzwerkknoten konfigurierte Informationen über die Kommunikationsendgeräte erforderlich. Hierdurch kann in besonders vorteilhafter Weise vermieden werden, konfigurierte Tabellen in den Netzwerkknoten vorzusehen, welche Informationen darüber enthalten, welcher Kontrollknoten für welches Kommunikationsendgerät zuständig ist. Die Verwaltung des Kommunikationsnetzes wird hierdurch für den Betreiber erheblich vereinfacht, da die Konfiguration dieser Tabellen entfallen kann. Dieser Vorteil macht sich besonders dann bemerkbar, wenn das Kommunikationsnetz über eine Vielzahl an Netzwerkknoten verfügt, welche ohne das Vorhandensein eines erfindungsgemäßen Vermittlungsknotens mit konfigurierten Informationen versorgt werden müssen. Die Erfindung stellt auch dann eine Erleichterung dar, wenn die Netzwerkknoten und die Kontrollknoten von verschiedenen Netzwerkbetreibern verwaltet werden. Ferner ist es in dem erfindungsgemäßen Kommunikationssystem möglich, kurzfristig die einem Kontrollknoten zugewiesenen Kommunikationsendgeräte zu ändern, beispielsweise um einen ausgefallenen Kontrollknoten zu ersetzen oder um dynamisch die Last zwischen mehreren Kontrollknoten zu verteilen.

In einer Weiterbildung des erfindungsgemäßen Kommunikationssystems sind der zumindest eine Netzwerkknoten, der zumindest eine Kontrollknoten und der zumindest eine Vermittlungsknoten in dem ersten Kommunikationsnetz angeordnet, wobei eine Kommunikation zwischen dem Kontrollknoten und dem Vermittlungsknoten sowie eine Kommunikation zwischen dem Netzwerkknoten und dem Vermittlungsknoten nach dem Diameter-Protokoll erfolgt.

In einer weiteren Ausgestaltung ist der Netzwerkknoten durch eine Applikationsfunktionalität bzw. Applikationsfunktion oder den Schnittstellenrechner dargestellt.

Eine weitere Ausführungsform des erfindungsgemäßen Kommunikationssystems sieht vor, dass das zweite Kommunikationsnetz auf dem GPRS (General Packet Radio Service)-Standard basiert und der Schnittstellenrechner ein Gateway GPRS Support Node-Rechner (GGSN) ist. Alternativ kann das zweite Kommunikationsnetz auf dem WLAN (Wireless Local Area Network)-Standard basieren, wobei der Schnittstellenrechner ein Packet Data Gateway-Rechner (PDG) ist.

Es ist ferner zweckmäßig, wenn der zumindest eine Vermittlungsknoten einen Randknoten des ersten Kommunikationsnetzes ausbildet. In dieser Ausführungsform kann der Vermittlungsknoten einen zentralen Eingangsknoten für sämtliche Netzwerkknoten außerhalb des ersten Kommunikationsnetzes darstellen. Dabei brauchen gesicherte Verbindungen (so genannte "Security Associations") zu den Netzwerkknoten nur an dem Vermittlungsknoten, nicht jedoch an den Kontrollknoten eingerichtet werden. Ein weiterer Vorteil dieser Ausführung besteht darin, dass die Kontrollknoten von so genannten "Denial of Service"-Angriffen abgeschirmt sind, jedoch für die Netzwerkknoten innerhalb des ersten Kommunikationsnetzes weiterhin erreichbar bleiben.

In einer weiteren Ausgestaltung wird zur Bestimmung des für ein Kommunikationsendgerät zuständigen Kontrollknotens durch den Vermittlungsknoten eine Anfrage-Nachricht auf einen das Kommunikationsendgerät kennzeichnenden Identifier untersucht. Das Kommunikationsendgerät kann dabei anhand seiner IP-Adresse, der International Mobile Subscriber Identity (IMFSI) oder der Mobile Station International ISDN-Number identifiziert werden. Im Falle der Identifikation anhand der IP-Adresse sind im Falle von IP-Version 6 nur die vorderen 64 Bit der IP-Adresse von Bedeutung.

In einer ersten Ausführungsform des erfindungsgemäßen Kommunikationssystems ist der Vermittlungsknoten dazu ausgebildet, die Anfrage-Nachricht direkt an den für das Kommunikationsendgerät zuständigen Kontrollknoten weiterzuleiten. Hierbei kann einerseits vorgesehen sein, dass der Vermittlungsknoten ausschließlich die erste Anfrage-Nachricht an den für das Kommunikationsendgerät zuständigen Kontrollknoten weiterleitet und daraufhin eine von dem Kontrollknoten generierte Antwort-Nachricht an den Netzwerkknoten überträgt. Die weitere Kommunikation kann daraufhin direkt zwischen dem Kontrollknoten und dem Netzwerkknoten erfolgen. Andererseits kann der Vermittlungsknoten dazu ausgebildet sein, sämtliche zwischen dem Netzwerkknoten und dem Kontrollknoten ausgetauschte Nachrichten zu vermitteln. Mit anderen Worten bedeutet dies, dass der erfindungsgemäße Vermittlungsknoten für den Verlauf des gesamten Datenaustauschs zwischen Kontrollknoten und Applikationsfunktion von Nachrichten in der Verbindung verbleibt.

In einer alternativen Ausführungsform ist der Vermittlungsknoten dazu ausgebildet, in Reaktion auf eine von einem Netzwerkknoten erzeugte Anfrage-Nachricht eine Antwort-Nachricht zu erzeugen und an den Netzwerkknoten zu übermitteln, in welcher der für das Kommunikationsendgerät zuständige Kontrollknoten angegeben ist. Dabei ist es zweckmäßig, dass der Netzwerkknoten bei seiner ersten Anfrage-Nachricht bezüglich eines neuen Dienstes zunächst den Vermittlungsknoten anspricht. Die weitere Kommunikation erfolgt weiter auf direktem Wege zwischen dem zuständigen Kontrollknoten und dem Netzwerkknoten.

In einer weiteren zweckmäßigen Ausgestaltung ist vorgesehen, dass ein Relay Agent zwischen dem Kontrollknoten und dem Vermittlungsknoten und/oder zwischen dem Vermittlungsknoten und dem Netzwerkknoten angeordnet ist, der dazu ausgebildet ist, zwischen diesen Knoten Anfrage- und/oder Antwort-Nachrichten weiterzuleiten. Durch die Möglichkeit, Anfrage- und/oder Antwort-Nachrichten nicht direkt zwischen dem Vermittlungsknoten und dem Kontrollknoten bzw. einem Netzwerkknoten übertragen zu müssen, eignet sich die Erfindung auch für große, komplexe Kommunikationsnetze.

In einer weiteren Ausführungsform ist in jeder Anfrage-Nachricht und in jeder Antwort-Nachricht eine Quelle und ein Ziel für die Nachricht angegeben, wobei der Netzwerkknoten in einer Anfrage-Nachricht den Vermittlungsknoten als Ziel angibt.

In einer Ausführungsform ersetzt der Vermittlungsknoten beim Empfang der Anfrage-Nachricht das von dem Netzwerkknoten in der Anfrage-Nachricht angegebene Ziel und gibt als neues Ziel den Kontrollknoten an und/oder ersetzt das von dem Kontrollknoten in der Antwort-Nachricht angegebene Ziel und gibt als neues Ziel den Netzwerkknoten an.

Dabei kann der Vermittlungsknoten gemäß einer weiteren Ausgestaltung beim Empfang der Anfrage-Nachricht die von dem Netzwerkknoten in der Anfrage-Nachricht angegebene Quelle oder beim Empfang der Antwort-Nachricht die von dem Kontrollknoten in der Antwort-Nachricht angegebene Quelle unverändert belassen. Wenn der Netzwerkknoten und der Kontrollknoten dann nachfolgende Nachrichten austauschen, so können sie dies unter direkter Angabe des Zielknotens tun. Damit ist es gemäß dieser Ausgestaltung nicht erforderlich, dass der Vermittlungsknoten nachfolgende Nachrichten zwischen dem Netzwerkknoten und dem Kontrollknoten weiterleitet.

In einer anderen Ausführungsform ersetzt der Vermittlungsknoten beim Empfang der Anfrage-Nachricht die von dem Netzwerkknoten in der Anfrage-Nachricht angegebene Quelle oder ersetzt beim Empfang der Antwort-Nachricht die von dem Kontrollknoten in der Antwort-Nachricht angegebene Quelle. Der Begriff der Quelle ist dabei jeweils derart zu verstehen, dass derjenige Knoten angegeben ist, welcher sich als Erzeuger der Nachricht ausgibt. In dieser Variante verbleibt der Vermittlungsknoten im Rahmen der weiteren Kommunikation zwischen dem Kontrollknoten und dem Netzwerkknoten in der Verbindung bestehen.

Gemäß einer weiteren Ausführungsform ist vorgesehen, dass der Vermittlungsknoten beim Empfang der Anfrage-Nachricht des Netzwerkknotens eine an den Vermittlungsknoten adressierte Antwort-Nachricht generiert, in welcher der Kontrollknoten als Ziel der weiteren Kommunikation benannt wird. Dies kann unter Verwendung eines "Result Codes" mit einem vorgegebenen Wert, z.B. dem Wert "DIAMETER_REDIRECT_INDICATION", erfolgen, wenn die Kommunikation, wie dies weiter oben als Ausführungsform beschrieben wurde, gemäß dem Diameter Protokoll geschieht. Bei dieser Ausführungsform benötigt der Netzwerkknoten konfigurierte Kenntnis über den Vermittlungsknoten.

Eine weitere Ausführungsform sieht vor, dass der Netzwerkknoten dazu ausgebildet ist, eine Request Routing-Nachricht zu erzeugen, wobei zwischen dem Vermittlungsknoten und dem Netzwerkknoten sowie zwischen dem Vermittlungsknoten und dem Kontrollknoten ausgetauschte Nachrichten unterschiedliche Kennzeichner (Application Identifier) aufweisen. In dieser Ausführungsform wird vermieden, dass der Netzwerkknoten konfigurierte Kenntnis über die Adresse des Vermittlungsknotens benötigt. In einer Ausprägung kann es erforderlich sein, dass der erfindungsgemäße Vermittlungsknoten auch alle weiteren Nachrichten, die zwischen dem Netzwerkknoten und dem Kontrollknoten ausgetauscht werden, weiterreicht. In diesem Fall ist der Vermittlungsknoten dazu ausgebildet, einen Austausch der Kennzeichner beim Erhalt einer Nachricht vorzunehmen.

In einer weiteren Ausführungsform ist der Netzwerkknoten dazu ausgebildet, eine Request Routing-Nachricht zu erzeugen, wobei zwischen dem Vermittlungsknoten und dem Netzwerkknoten sowie zwischen dem Netzwerkknoten und dem Kontrollknoten ausgetauschte Nachrichten unterschiedliche Kennzeichner (Application Identifier) aufweisen. In einer Ausprägung generiert der Vermittlungsknoten beim Empfang der Anfrage-Nachricht des Netzwerkknotens eine an den Netzwerkknoten generierte adressierte Antwort-Nachricht, in welcher der Kontrollknoten als Ziel der weiteren Kommunikation benannt wird. Auch in dieser Ausführungsform wird durch den Vermittlungsknoten ein Result Code erzeugt, der jedoch unterschiedlich zu dem im Diameter Standard vorgesehenen Wert, z.B. "DIAMETER_REDIRECT_INDICATION", ist, um zu verhindern, dass eventuell vorhandene Relay Agents die Antwort-Nachricht direkt an den angegebenen Kontrollknoten weiterleiten, da letzterer eine solche Nachricht mit einem falschen Kennzeichner ablehnen würde. Darüber hinaus kann auf diese Weise auch dem Netzwerkknoten mitgeteilt werden, dass neben dem Zielknoten auch der Kennzeichner (Application Identifier) zu ändern ist.

Ist der Netzwerkknoten durch den Schnittstellenrechner gebildet, so sendet dieser eine Anfrage-Nachricht bezüglich eines PDP Kontextes für den Druck-Kontrollknoten unter Angabe des Kommunikationsendgerätes an den Vermittlungsknoten. Die Art der Kommunikation kann dabei wie vorab beschrieben realisiert werden.

Die nachfolgend beschriebenen bevorzugten Ausführungsformen betreffen verschiedene Vorgehensweisen bzw. Ausprägungen, wie der Vermittlungsknoten Kenntnis über die Zuordnung von Kommunikationsendgeräten zu jeweiligen Kontrollknoten enthält.

Gemäß einer Ausführungsform verfügt der Vermittlungsknoten über Konfigurationsinformationen über die Zuordnung eines Kommunikationsendgeräts zu einem Kontrollknoten. Sofern mehrere Vermittlungsknoten in dem ersten Kommunikationsnetz vorgesehen sind, z.B. aus Skalierungs- oder Redundanzgründen, so verfügt jeder der Vermittlungsknoten über eine derartige Konfigurationsinformationen.

In einer anderen Ausführungsform ist der Vermittlungsknoten dazu ausgebildet, einen Kontrollknoten für ein Kommunikationsendgerät auszuwählen. Dies kann gemäß einer weiteren Ausführungsform dadurch erfolgen, dass eine Auswahl eines Kontrollknotens durch den Vermittlungsknoten erfolgt, wenn dem Vermittlungsknoten der aus einer Anfrage-Nachricht extrahierte, das Kommunikationsendgerät kennzeichnende Identifier noch nicht bekannt ist. Durch diese Variante kann vermieden werden, dass der Vermittlungsknoten konfigurierte Informationen über eine Zuordnung von Kommunikationsendgeräten zu jeweiligen Kontrollknoten benötigt. Zusätzlich wird eine dynamische Lastverteilung zwischen den Kontrollknoten dadurch ermöglicht, dass der Vermittlungsknoten das neue Kommunikationsendgerät einem solchen Kontrollknoten zuweist, der zu dem gegebenen Zeitpunkt für die wenigsten Kommunikationsendgeräte zuständig ist. In dieser Variante ist es erforderlich, dass auch der Vermittlungsrechner den zuständigen Kontrollknoten ermittelt wie die Applikationsfunktion, wobei sich diese desselben Vermittlungsknotens bedienen. Der Schnittstellenrechner sendet hierzu die erste Anfrage-Nachricht bezüglich eines PDP Kontextes für den Kontrollknoten unter Angabe des Kommunikationsendgerätes an den Vermittlungsknoten.

Um zu erfahren, wann ein Identifier eines Kommunikationsendgerätes nicht mehr verwendet wird, und bei späterer erneuter Verwendung einem neuen Kontrollknoten zugewiesen werden kann, reicht der Vermittlungsknoten alle Nachrichten einer Session zwischen einer Applikationsfunktion und dem Kontrollknoten bzw. zwischen dem Schnittstellenrechner und dem Kontrollknoten ebenfalls weiter. Dazu trägt der Vermittlungsknoten sich selbst als Ursprung jeder weitergereichten Nachricht ein. Wenn alle Sessions zwischen dem Schnittstellenrechner und dem Kontrollknoten beendet sind, die demselben Identifier zugeordnet waren, wird dieser nicht mehr verwendet und der Vermittlungsknoten kann alle gespeicherten Daten bezüglich dieses Identifiers löschen.

In einer weiteren Ausgestaltung weisen eine Mehrzahl an Vermittlungsknoten eine Kommunikationsverbindung zueinander auf, um einen Datenaustausch hinsichtlich der dynamisch vorgenommenen Zuordnung der Kommunikationsendgeräte kennzeichnenden Identifier vornehmen zu können.

In einer weiteren Ausführungsform weisen die Kontrollknoten Kenntnis über die Zuordnung der ihnen zugewiesenen Kommunikationsendgeräte auf, und übertragen diese Informationen im Rahmen von Capability Exchange-Nachrichten an den Vermittlungsknoten. Die Übertragung der Capability Exchange-Nachrichten erfolgt beim Aufbau einer Verbindung zum Vermittlungsknoten. In diese Nachrichten werden die erfindungsgemäßen Angaben zu den unterstützten Endgeräten eingefügt. Dies ist besonders dann vorteilhaft, wenn mehrere erfindungsgemäße Vermittlungsknoten in dem Kommunikationsnetz vorgesehen sind.

Ein erfindungsgemäßer Vermittlungsknoten-Rechner zur Verwendung in dem oben beschriebenen Kommunikationssystem ist dazu eingerichtet, den für ein betreffendes Kommunikationsendgerät eines Kommunikationssystems zugeordneten Kontrollknoten zu bestimmen, so dass die von dem zumindest einen Netzwerkknoten bereitgestellten Informationen an diesen Kontrollknoten übermittelbar sind.

Bei einem erfindungsgemäßen Verfahren zum Verarbeiten einer von einem Netzwerkknoten einem Vermittlungsknoten zugeführten Nachricht in einem, wie oben beschriebenen, Kommunikationssystem bestimmt der Vermittlungsknoten den für ein betreffendes Kommunikationsendgerät zugeordneten Kontrollknoten, worauf die von dem zumindest einen Netzwerkknoten bereitgestellten Informationen an diesen Kontrollknoten übermittelt werden.

Die Erfindung wird nachfolgend anhand der Figuren näher erläutert. Es zeigen:
- Fig. 1: ein erstes Ausführungsbeispiel eines erfindungsgemäßen Kommunikationssystems,
- Fig. 2: den Ablauf der Signalisierung zwischen einer Applikationsfunktion, einem Vermittlungsknoten und einem Kontrollknoten gemäß einer ersten Variante,
- Fig. 3: den Ablauf der Signalisierung zwischen einer Applikationsfunktion, einem Vermittlungsknoten und einem Kontrollknoten gemäß einer zweiten Variante,
- Fig. 4: den Ablauf der Signalisierung zwischen einer Applikationsfunktion, einem Relay Agent, einem Vermittlungsknoten und einem Kontrollknoten gemäß einer ersten Variante,
- Fig. 5: den Ablauf einer Signalisierung zwischen einer Applikationsfunktion, einem Relay Agent, einem Vermittlungsknoten sowie einem Kontrollknoten gemäß einer zweiten Variante,
- Fig. 6: ein zweites Ausführungsbeispiel eines erfindungsgemäßen Kommunikationssystems, und
- Fig. 7: die Signalisierung zwischen einem Schnittstellenrechner, einer Applikationsfunktion, einem Vermittlungsknoten und einem Kontrollknoten in einem Kommunikationssystem gemäß Figur 6.

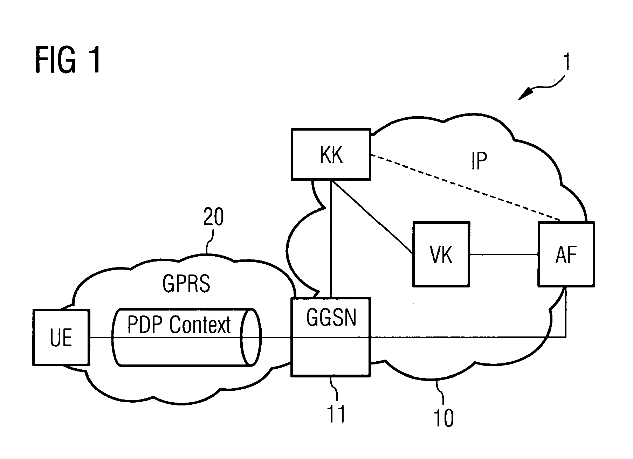

Figur 1 zeigt den Aufbau eines erfindungsgemäßen Kommunikationssystems 1 in einem ersten Ausführungsbeispiel. Das Kommunikationssystem 1 umfasst ein erstes Kommunikationsnetz 10, das beispielsweise auf dem IP-Standard basiert, und ein beispielhaft auf dem GPRS-Standard basierendes zweites Kommunikationsnetz 20.

Das erste Kommunikationsnetz 10 umfasst einen als "Gateway GPRS Support Node" GGSN ausgebildeten Schnittstellenrechner 11 (nachfolgend auch als Netzwerkknoten GGSN bezeichnet), einen Steuerungs- und Kontrollfunktionen inne habenden Kontrollknoten KK (beispielsweise eine "Policy Decision Function" PDF, eine "Charging Rules Function" CRF oder eine "Policy and Charging Rules Function" PCFR), einen Vermittlungsknoten VK und eine Applikationsfunktion AF als weiteren Netzwerkknoten des ersten Kommunikationsnetzes. Der Netzwerkknoten GGSN, der Kontrollknoten KK, der Vermittlungsknoten VK und AF sind weisen eine Kommunikationsverbindung zueinander auf, wobei die Kommunikation beispielsweise unter Verwendung des Diameter-Protokolls erfolgt, auf welches in der nachfolgenden Beschreibung weiter Bezug genommen wird. Die Kommunikation könnte stattdessen auch unter Verwendung anderer Protokolle erfolgen.

Das zweite Kommunikationsnetz 20, das ein Zugangsnetzwerk darstellt, umfasst ein Kommunikationsendgerät UE, das einen oder mehrere PDP Kontexte als Verbindung zu dem Schnittstellenrechner 11 (GGSN) nutzt. Das Kommunikationsendgerät UE tauscht mit der Applikationsfunktion AF eine Signalisierung und möglicherweise auch Nutzdaten aus. Die Applikationsfunktion AF tauscht mit dem Kontrollknoten KK mit Hilfe des Diameter Protokolls Nachrichten aus. Die Applikationsfunktion AF nutzt erfindungsgemäß den Vermittlungsknoten VK, um eine Diameter Verbindung zu dem Kontrollknoten KK herzustellen.

Die Erfindung ist auch für andere Arten von Zugangsnetzen anwendbar, wie zum Beispiel ein auf dem Standard WLAN basierendes zweites Kommunikationsnetz. Im Falle von WLAN tritt dann an die Stelle des GGSN als Schnittstellenrechner eine so genannte "Packet Data Gateway" (PDG).

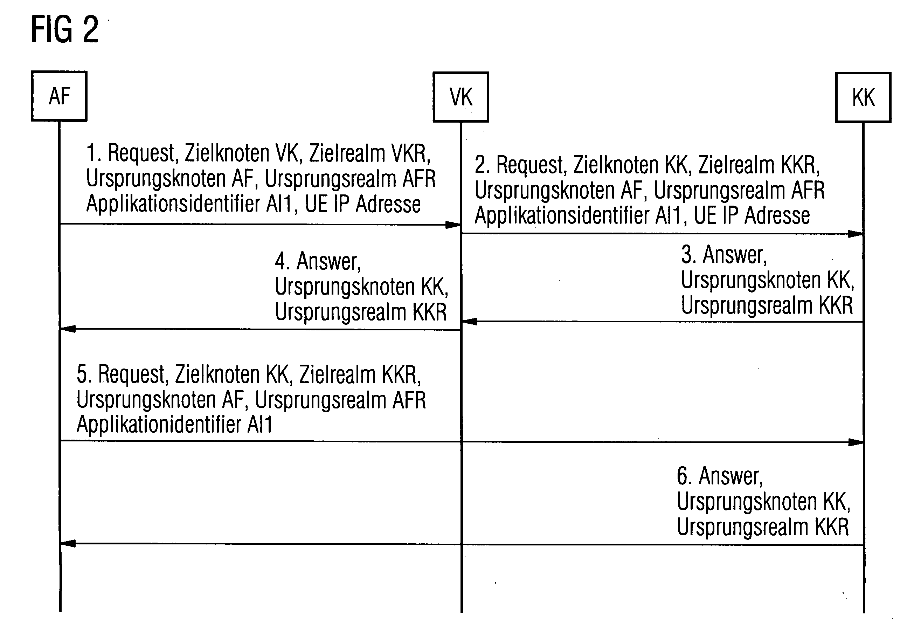

Figur 2 zeigt die Signalisierung zwischen einer Applikationsfunktion AF, einem Diameter Vermittlungsknoten VK und einem Kontrollknoten KK in einer ersten Variante. Die Signalisierungsschritte sind im Einzelnen wie folgt:
1. Die Applikationsfunktion AF beginnt mit einem Kommunikationsendgerät UE einen neuen Dienst. Die Applikationsfunktion AF will deswegen den für das Kommunikationsendgerät UE zuständigen Kontrollknoten KK über den neuen Dienst informieren, kennt den Kontrollknoten KK aber nicht. Die Applikationsfunktion AF verfügt über konfigurierte Informationen eines zuständigen Vermittlungsknotens VK. Die Applikationsfunktion AF sendet eine Anfrage-Nachricht (nachfolgend auch als Diameter "Request"- Nachricht bezeichnet) an den Vermittlungsknoten VK, um eine neue Diameter Session zum zuständigen Kontrollknoten KK aufzubauen. Die Applikationsfunktion AF gibt darin den Vermittlungsknoten VK als Zielknoten an und fügt einen Identifikator des Kommunikationsendgeräts UE ein, beispielsweise die IP Adresse des Kommunikationsendgeräts UE. Die Anfrage-Nachricht kann von standardkonformen, Diameter Relay Agents, weitergereicht werden, die in der Figur nicht dargestellt sind.
2. Der Vermittlungsknoten VK ermittelt mit Hilfe des Identifikators des Kommunikationsendgeräts UE den zuständigen Kontrollknoten KK, beispielsweise unter Verwendung einer konfigurierten Zuordnungstabelle. Der Vermittlungsknoten VK reicht die Anfrage-Nachricht an den Kontrollknoten KK weiter und gibt darin auch den Kontrollknoten KK als Zielknoten an. Die Anfrage-Nachricht kann ebenfalls von einem oder von mehreren Diameter Relay Agents weitergereicht werden, die in der Figur nicht dargestellt sind.
3. Der Kontrollknoten KK antwortet gemäß Diameter Standard mit einer Antwort-Nachricht (nachfolgend auch als "Answer" Nachricht bezeichnet) und gibt sich selbst darin als Ursprungsknoten an.
4. Der Vermittlungsknoten VK reicht die Antwort-Nachricht weiter. Die Applikationsfunktion AF entnimmt der Antwort-Nachricht den für das Kommunikationsendgerät UE zuständigen Kontrollknoten KK.
5. Die Applikationsfunktion AF schickt eine nachfolgende Anfrage-Nachricht innerhalb derselben Diameter "Session" direkt zu dem Kontrollknoten KK. Ein Weiterreichen der Nachricht durch den Vermittlungsknoten VK ist nur dann erforderlich, wenn die Applikationsfunktion AF und der Kontrollknoten KK über keine direkte Diameter Verbindung verfügen.
6. Der Kontrollknoten KK antwortet gemäß Diameter Standard mit einer Antwort-Nachricht direkt zur Applikationsfunktion AF.

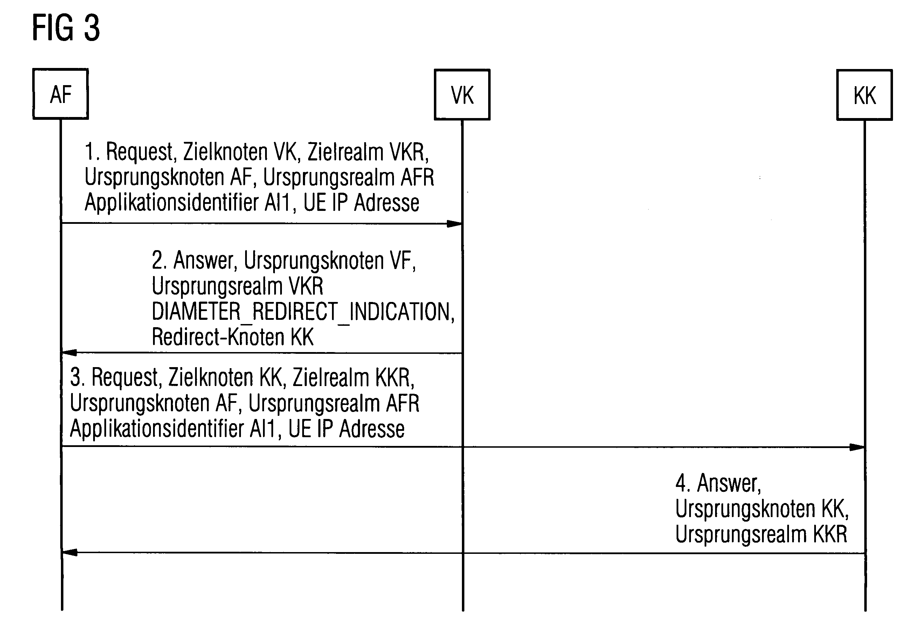

Figur 3 zeigt die Signalisierung zwischen einer Applikationsfunktion AF, einem Diameter Vermittlungsknoten VK und einem Kontrollknoten KK in einer zweiten Variante. Die Signalisierungsschritte sind im Einzelnen wie folgt:
1. Die Applikationsfunktion AF beginnt mit einem Kommunikationsendgerät UE einen neuen Dienst. Die Applikationsfunktion AF will deswegen den für das Kommunikationsendgerät UE zuständigen Kontrollknoten KK über den neuen Dienst informieren, kennt den Kontrollknoten KK aber nicht. Die Applikationsfunktion AF verfügt über konfigurierte Informationen eines zuständigen Vermittlungsknotens VK. Die Applikationsfunktion AF sendet eine Anfrage-Nachricht (Diameter "Request" Nachricht) an den Vermittlungsknoten VK, um eine neue Diameter Session zum zuständigen Kontrollknoten KK aufzubauen. Die Applikationsfunktion AF gibt darin erfindungsgemäß den Vermittlungsknoten VK als Zielknoten an, und fügt einen Identifikator des Kommunikationsendgeräts UE ein, beispielsweise die IP Adresse des Kommunikationsendgeräts UE. Die Anfrage-Nachricht kann von standardkonformen Diameter Relay Agents weitergereicht werden, die in der Figur nicht dargestellt sind.
2. Der Vermittlungsknoten VK ermittelt mit Hilfe des Identifikators des Kommunikationsendgeräts UE den für dieses zuständigen Kontrollknoten KK, beispielsweise mit Hilfe einer konfigurierten Zuordnungstabelle. Der Vermittlungsknoten VK sendet eine Antwort-Nachricht ("Answer" Nachricht) zurück an die Applikationsfunktion AF, wobei in dieser als so genannter "Result Code" ein bestimmter Wert, z.B. der Wert "DIAMETER_REDIRECT_INDICATION", angegeben ist und der Kontrollknoten KK als so genannter "Redirect Host" oder "Redirect Knoten" bezeichnet ist. Die Antwort-Nachricht an die Applikationsfunktion AF kann von einem oder von mehreren Diameter Relay Agents weitergereicht werden, die in der Figur nicht dargestellt sind. Die Applikationsfunktion AF entnimmt der Antwort-Nachricht den zuständigen Kontrollknoten KK. Ein Relay Agent kann in einer alternativen Variante auch direkt die zuvor gespeicherte Anfrage-Nachricht (vgl. Schritt 1.) an den Redirect Host KK weiterreichen (hier nicht dargestellt).
3. Die Applikationsfunktion AF sendet eine Anfrage-Nachricht innerhalb derselben Diameter "Session" direkt zu dem Kontrollknoten KK. Auch weitere nachfolgende Anfrage-Nachrichten innerhalb derselben Diameter "Session" kann die Applikationsfunktion AF nun direkt zu dem Kontrollknoten KK senden.
4. Der Kontrollknoten KK antwortet gemäß Diameter Standard mit einer Antwort-Nachricht direkt zur Applikationsfunktion AF.

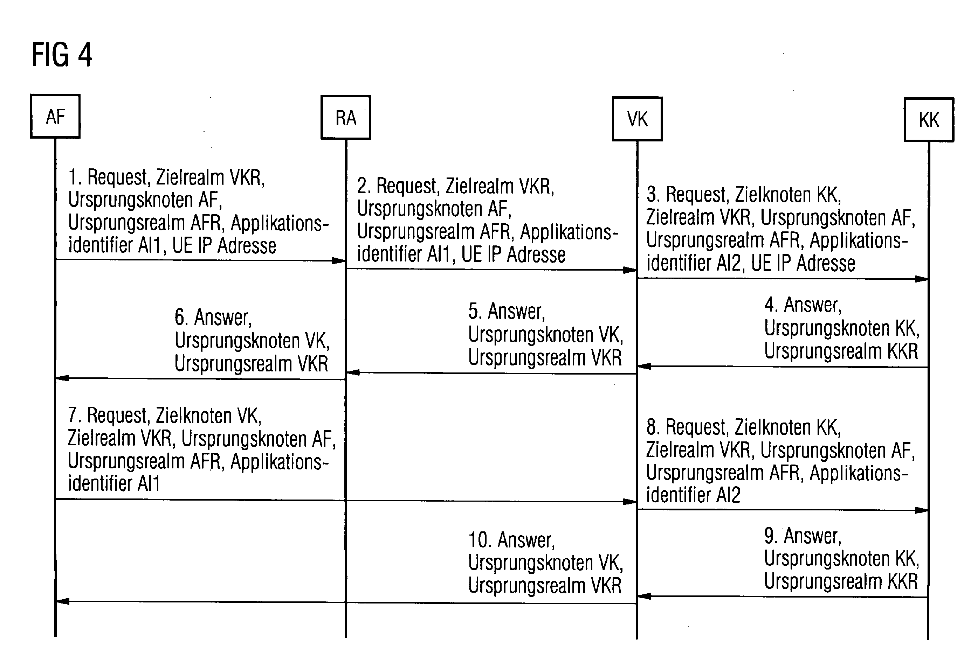

Figur 4 zeigt die Signalisierung zwischen einer Applikationsfunktion AF, einem Diameter Relay Agent RA, einem Diameter Vermittlungsknoten VK und einem Kontrollknoten KK gemäß einer ersten Variante. Die Signalisierungsschritte sind im Einzelnen wie folgt:
1. Die Applikationsfunktion AF beginnt mit einem Kommunikationsendgerät UE einen neuen Dienst. Die Applikationsfunktion AF will deswegen den für UE zuständigen Kontrollknoten KK über den neuen Dienst informieren, kennt den Kontrollknoten KK aber nicht. Die Applikationsfunktion AF verfügt auch über kein konfiguriertes Wissen über einen geeigneten Vermittlungsknoten VK und will stattdessen Diameter "Routing" nutzen, um einen Vermittlungsknoten zu finden. Die Applikationsfunktion AF sendet eine Anfrage-Nachricht (Diameter "Request" Nachricht) an den Relay Agent RA. Die Applikationsfunktion AF gibt darin eine Realm VKR an, in der sich ein geeigneter Vermittlungsknoten VK sowie der Kontrollknoten KK befinden müssen, und gibt einen speziellen Kennzeichner (Applikation Identifer oder Application ID) AI1 an, der nur dem Diameter Vermittlungsknoten VK zugewiesen ist. Ferner fügt die Applikationsfunktion AF einen Identifikator des Kommunikationsendgeräts UE in die Anfrage-Nachricht ein, beispielsweise die IP Adresse des Kommunikationsendgeräts UE.
2. Der Relay Agent RA ermittelt mit Hilfe der angegebenen Zielrealm VKR und des angegebenen Kennzeichners (Application Identifiers) AI1 einen geeigneten Vermittlungsknoten VK. Der Relay Agent RA reicht die Anfrage-Nachricht zu dem Vermittlungsknoten VK weiter.
3. Der Vermittlungsknoten VK ermittelt mit Hilfe des Identifikators des Kommunikationsendgeräts UE den zuständigen Kontrollknoten KK, beispielsweise mit Hilfe einer konfigurierten Zuordnungstabelle. Der Vermittlungsknoten VK reicht die Anfrage-Nachricht an den Kontrollknoten KK weiter und gibt darin auch den Kontrollknoten KK als Zielknoten an. Der Vermittlungsknoten VK gibt sich selbst als Ursprung der Nachricht an und verwendet einen geänderten Kennzeichner (Applikation Identifer oder Application ID) AI2, die dem Kontrollknoten KK zugewiesen ist. Die Anfrage-Nachricht kann in einer Ausgestaltung von einem weiteren Diameter Relay Agent weitergereicht werden (nicht dargestellt). Der Vermittlungsknoten VK speichert die Zuordnung der so genannten Diameter "User Session" zwischen der Applikationsfunktion AF und dem Vermittlungsknoten VK und der neuen "User Session" zwischen dem Vermittlungsknoten VK und dem Kontrollknoten KK ab.
4. Der Kontrollknoten KK antwortet gemäß Diameter Standard mit einer Antwort-Nachricht ("Answer" Nachricht) und gibt sich selbst darin als Ursprungsknoten an.
5. Der Vermittlungsknoten VF entnimmt der Antwort-Nachricht den zuständigen Kontrollknoten KK und speichert diesen ab. Der Vermittlungsknoten VK reicht die Antwort-Nachricht weiter. Dabei nutzt er erfindungsgemäß die abgespeicherte Zuordnung der Diameter "User Session" zwischen der Applikationsfunktion AF und dem Vermittlungsknoten VK und der "User Session" zwischen dem Vermittlungsknoten VK und dem Kontrollknoten KK, um das Ziel für die Antwort-Nachricht zu bestimmen. Der Vermittlungsknoten VK gibt sich selbst als Ursprung der Nachricht an.
6. Der Relay Agent RA reicht die Antwort-Nachricht weiter. Die Applikationsfunktion AF entnimmt der Antwort-Nachricht den zuständigen Vermittlungsknoten VK.
7. Die Applikationsfunktion AF schickt eine nachfolgende Anfrage-Nachricht ("Request" Nachricht) innerhalb derselben Diameter "Session" direkt zu dem Vermittlungsknoten VK. Ein Weiterreichen der Nachricht durch den Relay Agent RA ist nur dann erforderlich, wenn die Applikationsfunktion AF und der Vermittlungsknoten VK über keine direkte Diameter Verbindung verfügen.
8. Der Vermittlungsknoten VK ermittelt mittels der abgespeicherten Zuordnung der Diameter "User Session" zwischen der Applikationsfunktion AF und dem Vermittlungsknoten VK sowie der "Uesr Session" zwischen dem Vermittlungsknoten VK und dem Kontrollknoten KK sowie des abgespeicherten Kontrollknotens KK das Ziel für die Anfrage-Nachricht. Der Vermittlungsknoten VK reicht die Anfrage-Nachricht an den Kontrollknoten KK weiter und gibt darin auch den Kontrollknoten KK als Zielknoten an. Der Vermittlungsknoten VK gibt sich selbst als Ursprung der Nachricht an und verwendet einen geänderten Kennzeichner (Application Identifier) AI2.
9. Der Kontrollknoten KK antwortet gemäß Diameter Standard mit einer Antwort-Nachricht ("Answer" Nachricht) zu dem Vermittlungsknoten VK.
10. Der Vermittlungsknoten VK reicht die Antwort-Nachricht weiter. Dabei nutzt er erfindungsgemäß die abgespeicherte Zuordnung der Diameter "User Session" zwischen der Applikationsfunktion AF und dem Vermittlungsknoten VK und der "User Session" zwischen dem Vermittlungsknoten VK und dem Kontrollknoten KK, um das Ziel für die Antwort-Nachricht zu bestimmen. Der Vermittlungsknoten VK gibt sich selbst als Ursprung der Nachricht an.

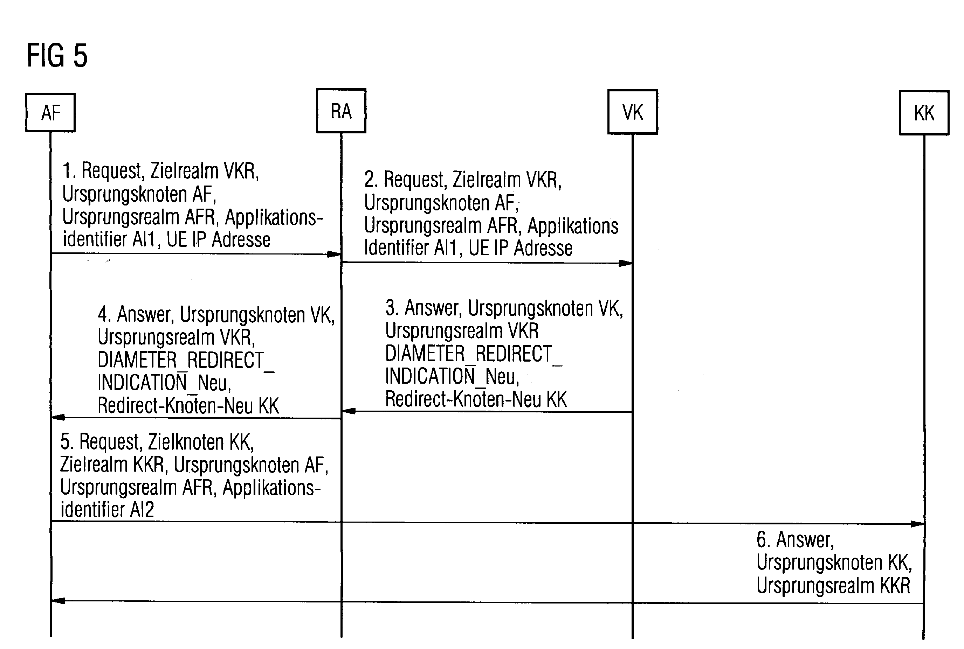

Figur 5 zeigt die Signalisierung zwischen einer Applikationsfunktion AF, einem Diameter Relay Agent RA, einem Diameter Vermittlungsknoten VK und einem Kontrollknoten KK gemäß einer zweiten Variante. Die Signalisierungsschritte sind im Einzelnen wie folgt:
1. Die Applikationsfunktion AF beginnt mit einem Kommunikationsendgerät UE einen neuen Dienst. Die Applikationsfunktion AF will deswegen den für das Kommunikationsendgerät UE zuständigen Kontrollknoten KK über den neuen Dienst informieren, kennt den Kontrollknoten KK aber nicht. Die Applikationsfunktion AF verfügt auch über kein konfiguriertes Wissen über einen geeigneten Vermittlungsknoten VK, und will statt dessen Diameter "Routing" nützen, um einen Vermittlungsknoten zu finden. Die Applikationsfunktion AF sendet eine Anfrage-Nachricht (Diameter "Request" Nachricht) an den Relay Agent RA. Die Applikationsfunktion AF gibt darin die Realm VKR an, in der sich ein geeigneter Vermittlungsknoten VK sowie der Kontrollknoten KK befinden müssen, und gibt einen speziellen Kennzeichner (Application Identifier oder Application ID) AI1 an, die nur dem Diameter Vermittlungsknoten VK zugewiesen ist. Ferner fügt die Applikationsfunktion AF einen Identifikator des Kommunikationsendgeräts UE ein, beispielsweise die IP Adresse des Kommunikationsendgeräts UE.
2. Der Relay Agent RA ermittelt mit Hilfe der angegebenen Zielrealm VKR und des angegebenen Kennzeichners AI1 einen geeigneten Vermittlungsknoten VK. Der Relay Agent RA reicht die Anfrage-Nachricht zu dem Vermittlungsknoten VK weiter.
3. Der Vermittlungsknoten VK ermittelt erfindungsgemäß mit Hilfe des Identifikators des Kommunikationsendgeräts UE den zuständigen Kontrollknoten KK, beispielsweise mit Hilfe einer konfigurierten Zuordnungstabelle. Der Vermittlungsknoten VK sendet eine Antwort-Nachricht ("Answer" Nachricht), wobei er als Result Code einen neuen Wert, z.B. "DIAMETER_REDIRECT_INDICATION_Neu", und den Kontrollknoten KK als so genannten "Redirect Host" oder "Redirect Knoten" angibt.
4. Die "Answer" Nachricht wird von dem Relay Agent RA weitergereicht. Da der Relay Agent RA, wenn er als standardkonformer Diameter "Relay Agent" ausgebildet ist, den neuen Wert des Result Codes "DIAMETER_REDIRECT_INDICATION_Neu" nicht kennt, wird verhindert, dass der Relay Agent RA die zuvor gespeicherte Anfrage-Nachricht (vgl. Schritt 1.) direkt an den Redirect Knoten KK weiterreicht. Die Applikationsfunktion AF entnimmt der Antwort-Nachricht den zuständigen Kontrollknoten KK.
5. Die Applikationsfunktion AF schickt eine Anfrage-Nachricht ("Request" Nachricht) innerhalb derselben Diameter "Session" direkt zum Kontrollknoten KK. Darin verwendet die Applikationsfunktion AF einen speziellen Kennzeichner (Application Identifier oder Application ID) AI2, der nur dem Kontrollknoten zugewiesen ist. Auch weitere nachfolgende Anfrage-Nachrichten innerhalb derselben Diameter "Session" kann die Applikationsfunktion AF nun direkt zu dem Kontrollknoten KK senden.
6. Der Kontrollknoten KK antwortet gemäß Diameter Standard mit einer Antwort-Nachricht ("Answer" Nachricht) direkt zur Applikationsfunktion AF.

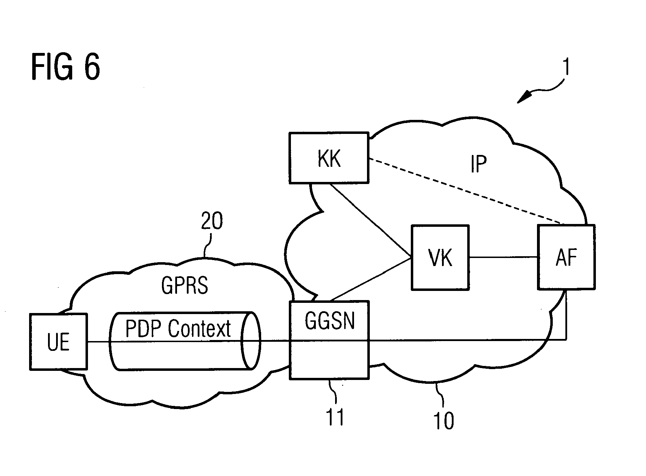

Figur 6 zeigt ein zweites Ausführungsbeispiel eines erfindungsgemäßen Kommunikationssystems 1. Der Aufbau entspricht prinzipiell dem ersten Ausführungsbeispiel gemäß Figur 1. Anders als in Figur 1 tauschen der Schnittstellenrechner 11 (im Ausführungsbeispiel ein GGSN) und der Kontrollknoten KK jedoch nicht direkt Nachrichten aus, sondern die Nachrichten werden von einem erfindungsgemäßen Vermittlungsknoten VK weitergereicht, der an Stelle des Schnittstellenrechners 11 (GGSN) erfindungsgemäß den für das Kommunikationsendgerät UE zuständigen Kontrollknoten KK ermittelt.

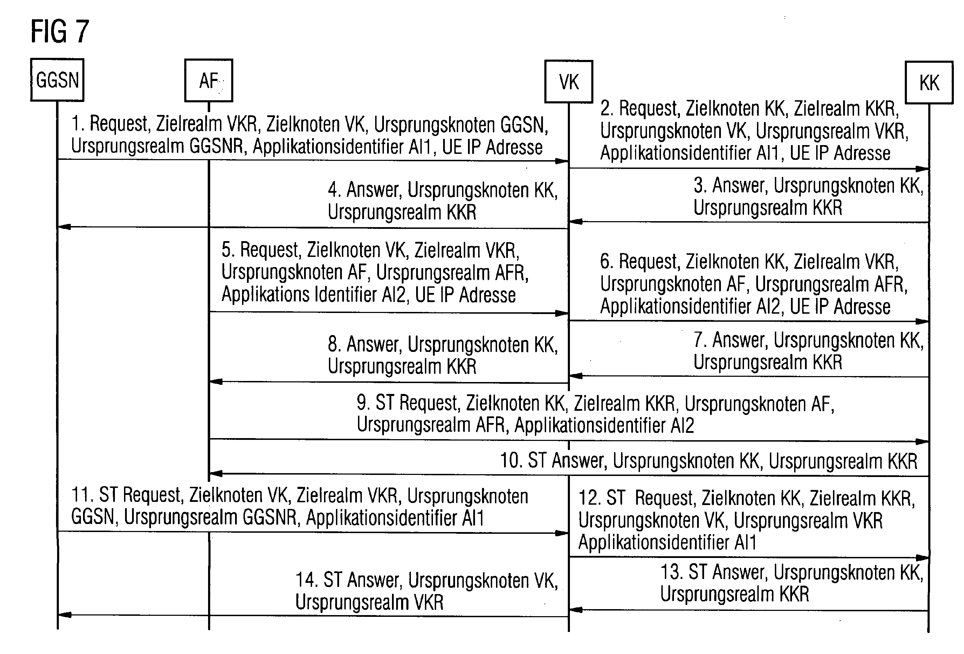

Figur 7 zeigt die Signalisierung zwischen den Netzwerkknoten und dem Kommunikationsendgerät UE in einem Kommunikationssystem gemäß Figur 6. Die Signalisierungsschritte sind im Einzelnen wie folgt:
1. Das Kommunikationsendgerät UE hat am Schnittstellenrechner 11 bzw. Netzwerkknoten GGSN den Aufbau eines neuen PDP Kontextes angefordert und bekommt von dem Netzwerkknoten GGSN eine IP Adresse zugewiesen. Der Netzwerkknoten GGSN will deswegen den für das Kommunikationsendgerät UE zuständigen Kontrollknoten KK über den neuen Dienst informieren, kennt den Kontrollknoten KK aber nicht, da dieser erst dynamisch dem Kommunikationsendgerät UE zugewiesen wird. Der Netzwerkknoten GGSN verfügt über konfiguriertes Wissen über einen geeigneten Vermittlungsknoten VK und sendet eine Anfrage-Nachricht (Diameter "Request" Nachricht) an den Vermittlungsknoten VK. Der Netzwerkknoten GGSN gibt darin einen Kennzeichner (Application Identifier oder Application ID) AI1 an, der den Kontrollknoten zur Kommunikation mit dem Netzwerkknoten GGSN zugewiesen ist, und fügt einen Identifikator des Kommunikationsendgeräts UE ein, beispielsweise die IP Adresse des Kommunikationsendgeräts UE.
2. Der Vermittlungsknoten VK stellt erfindungsgemäß mit Hilfe des Identifikators des UE fest, dass der Identifikator keinem Kontrollknoten zugewiesen ist, und wählt einen Kontrollknoten KK aus. Dies kann beispielsweise der Kontrollknoten KK sein, dem zu diesem Zeitpunkt die wenigsten Identifikatoren und damit die wenigsten Kommunikationsendgeräte zugewiesen sind. Der Vermittlungsknoten VK speichert die Zuordnung des Identifikators des Kommunikationsendgeräts UE zu dem Kontrollknoten KK ab. Der Vermittlungsknoten VK speichert zusätzlich die Zuordnung des Identifikators des Kommunikationsendgeräts UE zur Diameter Session zu dem Netzwerkknoten GGSN ab. Der Vermittlungsknoten VK reicht die Anfrage-Nachricht ("Request" Nachricht) an den Kontrollknoten KK weiter und gibt darin auch den Kontrollknoten KK als Zielknoten an. Der Vermittlungsknoten VK gibt sich selbst als Ursprung der Nachricht an, um zu erreichen, dass alle nachfolgenden Nachrichten zwischen dem Netzwerkknoten GGSN und dem Kontrollknoten KK ebenfalls über den Vermittlungsknoten VK übertragen werden. Der Vermittlungsknoten VK speichert die Zuordnung der Diameter "User Session" zwischen dem Netzwerkknoten GGSN und dem Vermittlungsknoten VK und der neuen "User Session" zwischen dem Vermittlungsknoten VK und dem Kontrollknoten KK ab.
3. Der Kontrollknoten KK antwortet gemäß Diameter Standard mit einer Antwort-Nachricht ("Answer" Nachricht), und gibt sich selbst darin als Ursprungsknoten an.
4. Der Vermittlungsknoten VF entnimmt der Antwort-Nachricht den zuständigen Kontrollknoten KK und speichert diesen ab. Der Vermittlungsknoten VK reicht die Antwort-Nachricht weiter. Dabei nützt er die abgespeicherte Zuordnung der Diameter "User Session" zwischen dem Netzwerkknoten GGSN und dem Vermittlungsknoten VK und der "User Session" zwischen dem Vermittlungsknoten VK und dem Kontrollknoten KK, um das Ziel für die Antwort-Nachricht zu bestimmen. Der Vermittlungsknoten VK gibt sich selbst als Ursprung der Nachricht an.
5. Die Applikationsfunktion AF beginnt mit einem Kommunikationsendgerät UE einen neuen Dienst. Die Applikationsfunktion AF will deswegen den für das Kommunikationsendgerät UE zuständigen Kontrollknoten KK über den neuen Dienst informieren, kennt den Kontrollknoten KK aber nicht. Die Applikationsfunktion AF verfügt über konfigurierte Informationen eines zuständigen Vermittlungsknotens VK. Die Applikationsfunktion AF sendet eine Anfrage-Nachricht (Diameter "Request" Nachricht) an den Vermittlungsknoten VK, um eine neue Diameter Session zum zuständigen Kontrollknoten KK aufzubauen. Die Applikationsfunktion AF gibt darin den Vermittlungsknoten VK als Zielknoten an, und fügt einen Identifikator des Kommunikationsendgeräts UE ein, beispielsweise die IP Adresse des Kommunikationsendgeräts UE. Die Applikationsfunktion AF gibt darin einen Kennzeichner (Application Identifier oder Application ID) AI2 an, der dem Kontrollknoten KK zur Kommunikation mit den Applikationsfunktionen zugewiesen ist
6. Der Vermittlungsknoten VK ermittelt mit Hilfe des Identifikators des Kommunikationsendgeräts UE und der zuvor abgespeicherten Zuordnung den zuständigen Kontrollknoten KK. Der Vermittlungsknoten VK reicht die Anfrage-Nachricht an den Kontrollknoten KK weiter und gibt darin auch den Kontrollknoten KK als Zielknoten an.
7. Der Kontrollknoten KK antwortet gemäß Diameter Standard mit einer Antwort-Nachricht ("Answer" Nachricht) und gibt sich selbst darin als Ursprungsknoten an.
8. Der Vermittlungsknoten VK reicht die Antwort-Nachricht weiter. Die Applikationsfunktion AF entnimmt der Antwort-Nachricht den zuständigen Kontrollknoten KK.
9. Die Applikationsfunktion AF beendet den Dienst mit dem Kommunikationsendgerät UE. Die Applikationsfunktion AF schickt eine so genannte "Session Termination (ST) Request"-Nachricht innerhalb derselben Diameter "Session" direkt zum Kontrollknoten KK. Ein Weiterreichen der Nachricht durch den Vermittlungsknoten VK ist nur dann erforderlich, wenn die Applikationsfunktion AF und der Kontrollknoten KK über keine direkte Diameter Verbindung verfügen.
10. Der Kontrollknoten KK antwortet gemäß Diameter Standard mit einer Antwort-Nachricht ("Answer" Nachricht) direkt zu der Applikationsfunktion AF.
11. Das Kommunikationsendgerät UE baut den PDP Kontext ab und der Netzwerkknoten GGSN gibt die dem Kommunikationsendgerät UE zugeordnete IP Adresse wieder frei. Der Netzwerkknoten GGSN sendet eine "Session Termination (ST) Request" Nachricht, um den Kontrollknoten KK und den Vermittlungsknoten VK über den Abbau des PDP Kontextes zu informieren und die entsprechende Diameter Session zu beenden.
12. Der Vermittlungsknoten VK löscht die Zuordnung der Diameter Session zum Netzwerkknoten GGSN zum Identifikator des Kommunikationsendgeräts UE und überprüft, ob der Identifikator noch in weiteren Diameter Sessions zum Netzwerkknoten GGSN zugeordnet ist. Dies könnte dadurch realisiert sein, dass das Kommunikationsendgerät UE mehrere PDP Kontexte nützt. Da der Identifikator keiner Diameter Session mehr zugeordnet ist, löscht der Vermittlungsknoten VK auch die Zuordnung des Identifikators zum Kontrollknoten KK. Mittels der abgespeicherten Zuordnung der so genannten Diameter "User Session" zwischen der Applikationsfunktion AF und dem Vermittlungsknoten VK und der "User Session" zwischen dem Vermittlungsknoten VK und dem Kontrollknoten KK sowie des abgespeicherten Kontrollknotens KK ermittelt der Vermittlungsknoten VK das Ziel für die Anfrage-Nachricht ("Request" Nachricht). Der Vermittlungsknoten VK reicht die Anfrage-Nachricht an den Kontrollknoten KK weiter und gibt darin auch den Kontrollknoten KK als Zielknoten an. Der Vermittlungsknoten VK gibt sich selbst als Ursprung der Nachricht an.
13. Der KK antwortet gemäß Diameter Standard mit einer Antwort-Nachricht ("Answer" Nachricht) zum Vermittlungsknoten VK.
14. Der Vermittlungsknoten VK reicht die Antwort-Nachricht weiter. Dabei nutzt er die abgespeicherte Zuordnung der Diameter "User Session" zwischen der Applikationsfunktion AF und dem Vermittlungsknoten VK und der "User Session" zwischen dem Vermittlungsknoten VK und dem Kontrollknoten KK, um das Ziel für die Antwort-Nachricht zu bestimmen. Der Vermittlungsknoten VK gibt sich selbst als Ursprung der Nachricht an.

## Patentansprüche

1. Kommunikationssystem (1) mit
- einem ersten Kommunikationsnetz (10),
- einem zweiten Kommunikationsnetz (20) mit zumindest einem Kommunikationsendgerät (UE),
- einem Schnittstellenrechner (11), der mit dem ersten Kommunikationsnetz (10) gekoppelt ist zum Abbilden eines Datenstroms zwischen dem zumindest einen Kommunikationsendgerät (UE) und dem ersten Kommunikationsnetz (10),
- zumindest einem Kontrollknoten (KK) in dem ersten Kommunikationsnetz (10) zur Kontrolle des zwischen dem Schnittstellenrechner (11) und dem Kommunikationsendgerät (UE) auftretenden Datenstroms,
- zumindest einem Netzwerkknoten (AF, GGSN), welcher dem Kontrollknoten (KK) zur Durchführung dessen Kontrollfunktion, das Kommunikationsendgerät (UE) betreffende, Informationen bereitstellt, und
- zumindest einem Vermittlungsknoten (VK), welcher den für ein betreffendes Kommunikationsendgerät (UE) zugeordneten Kontrollknoten (KK) bestimmt, so dass die von dem zumindest einen Netzwerkknoten (AF, GGSN) bereitgestellten Informationen an diesen Kontrollknoten (KK) übermittelbar sind.

2. Kommunikationssystem nach Anspruch 1,
**dadurch gekennzeichnet, dass**
der zumindest eine Netzwerkknoten (AF, GGSN), der zumindest eine Kontrollknoten (KK) und der zumindest eine Vermittlungsknoten (VK) in dem ersten Kommunikationsnetz (10) angeordnet sind, und
eine Kommunikation zwischen dem Kontrollknoten (KK) und dem Vermittlungsknoten (VK) sowie eine Kommunikation zwischen dem Netzwerkknoten (AF, GGSN) und dem Vermittlungsknoten (VK) nach dem Diameter-Protokoll erfolgt.

3. Kommunikationssystem nach Anspruch 1 oder 2,
**dadurch gekennzeichnet, dass**
der Netzwerkknoten durch eine Applikationsfunktionalität (AF) oder den Schnittstellenrechner (11) dargestellt ist.

4. Kommunikationssystem nach einem der vorherigen Ansprüche,
**dadurch gekennzeichnet, dass**
das zweite Kommunikationsnetz (20) auf dem GPRS (General Packet Radio Service)-Standard basiert und der Schnittstellenrechner (11) ein Gateway GPRS Support Node-Rechner (GGSN) ist.

5. Kommunikationssystem nach einem der Ansprüche 1 bis 3,
**dadurch gekennzeichnet, dass**
das zweite Kommunikationsnetz (20) auf dem WLAN (Wireless Local Area Network)-Standard basiert und der Schnittstellenrechner (11) ein Packet Data Gateway-Rechner (PDG) ist.

6. Kommunikationssystem nach einem der vorherigen Ansprüche,
**dadurch gekennzeichnet, dass**
der zumindest eine Kontrollknoten (KK) einen Randknoten des ersten Kommunikationsnetzes (10) ausbildet.

7. Kommunikationssystem nach einem der vorherigen Ansprüche,
**dadurch gekennzeichnet, dass**
zur Bestimmung des für ein Kommunikationsendgerät (UE) zuständigen Kontrollknotens (KK) durch den Vermittlungsknoten (VK) eine Anfrage-Nachricht auf einen das Kommunikationsendgerät (UE) kennzeichnenden Identifier untersucht wird.

8. Kommunikationssystem nach Anspruch 7,
**dadurch gekennzeichnet, dass**
das Endgerät (UE) anhand seiner IP-Adresse, der International Mobile Subscriber Identity (IMSI) oder der Mobile Station International ISDN Number (MSISDN) identifizierbar ist.

9. Kommunikationssystem nach einem der vorherigen Ansprüche,
**dadurch gekennzeichnet, dass**
der Vermittlungsknoten (VK) dazu ausgebildet ist, die Anfrage-Nachricht direkt an den für das Endgerät (UE) zuständigen Kontrollknoten (KK) weiter zu leiten.

10. Kommunikationssystem nach Anspruch 9,
**dadurch gekennzeichnet, dass**
der Vermittlungsknoten (VK) ausschließlich die erste Anfrage-Nachricht an den für das Endgerät (UE) zuständigen Kontrollknoten (KK) weiterleitet und daraufhin eine von dem Kontrollknoten (KK) generierte Antwort-Nachricht an den Netzwerkknoten (AF, GGSN) übertragt.

11. Kommunikationssystem nach Anspruch 9,
**dadurch gekennzeichnet, dass**
der Vermittlungsknoten (VK) dazu ausgebildet ist, sämtliche zwischen dem Netzwerkknoten (AF, GGSN) und dem Kontrollknoten (KK) ausgetauschte Nachrichten zu vermitteln.

12. Kommunikationssystem nach einem der Ansprüche 1 bis 8,
**dadurch gekennzeichnet, dass**
der Vermittlungsknoten (VK) dazu ausgebildet ist, in Reaktion auf eine von einem Netzwerkknoten (AF, GGSN) erzeugte Anfrage-Nachricht eine Antwort-Nachricht zu erzeugen und an den Netzwerkknoten (AF, GGSN) zu übermitteln, in welcher der für das Kommunikationsendgerät (UE) zuständige Kontrollknoten (KK) angegeben ist.

13. Kommunikationssystem nach einem der vorherigen Ansprüche,
**dadurch gekennzeichnet, dass**
ein Relay Agent (RA) zwischen dem Kontrollknoten (KK) und dem Vermittlungsknoten (VK) und/oder zwischen dem Vermittlungsknoten (VK) und dem Netzwerkknoten (AF/GGSN) angeordnet ist, der dazu ausgebildet ist, zwischen diesen Knoten Anfrage- und/oder Antwort-Nachrichten weiterzuleiten.

14. Kommunikationssystem nach einem der Ansprüche 9 bis 13,
**dadurch gekennzeichnet, dass** in jeder Anfrage-Nachricht und in jeder Antwort-Nachricht eine Quelle und ein Ziel für die Nachricht angegeben ist, und der Netzwerkknoten (AF, GGSN) in einer Anfrage-Nachricht den Vermittlungsknoten (VK) als Ziel angibt.

15. Kommunikationssystem nach Anspruch 14,
**dadurch gekennzeichnet, dass**
der Vermittlungsknoten (VK) beim Empfang der Anfrage-Nachricht
- das von dem Netzwerkknoten (AF, GGSN) in der Anfrage-Nachricht angegebene Ziel ersetzt und als neues Ziel den Kontrollknoten (KK) angibt und/oder
- das von dem Kontrollknoten (KK) in der Antwort-Nachricht angegebene Ziel ersetzt und als neues Ziel den Netzwerkknoten (AF, GGSN) angibt.

16. Kommunikationssystem nach Anspruch 14 oder 15,
**dadurch gekennzeichnet, dass**
der Vermittlungsknoten (VK) beim Empfang der Anfrage-Nachricht die von dem Netzwerkknoten (AF, GGSN) in der Anfrage-Nachricht angegebene Quelle oder beim Empfang der Antwort-Nachricht die von dem Kontrollknoten (KK) in der Antwort-Nachricht angegebene Quelle unverändert belässt.

17. Kommunikationssystem nach Anspruch 14 oder 15,
**dadurch gekennzeichnet, dass**
der Vermittlungsknoten (VK) beim Empfang der Anfrage-Nachricht die von dem Netzwerkknoten (AF, GGSN) in der Anfrage-Nachricht angegebene Quelle oder beim Empfang der Antwort-Nachricht die von dem Kontrollknoten (KK) in der Antwort-Nachricht angegebene Quelle ersetzt.

18. Kommunikationssystem nach Anspruch 14,
**dadurch gekennzeichnet, dass** der Vermittlungsknoten (VK) beim Empfang der Anfrage-Nachricht des Netzwerkknotens (AF, GGSN) eine an den Vermittlungsknoten (AF, GGSN) adressierte Antwort-Nachricht generiert, in welcher der Kontrollknoten als Ziel der weiteren Kommunikation benannt wird.

19. Kommunikationssystem nach einem der Ansprüche 9 bis 13,
**dadurch gekennzeichnet, dass**
der Netzwerkknoten (AF, GGSN) dazu ausgebildet ist, eine Request Routing-Nachricht zu erzeugen, wobei zwischen dem Vermittlungsknoten (VK) und dem Netzwerkknoten (AF, GGSN) sowie zwischen dem Vermittlungsknoten (VK) und dem Kontrollknoten (KK) ausgetauschte Nachrichten unterschiedliche Kennzeichner (Application Identifier) aufweisen.

20. Kommunikationssystem nach Anspruch 19,
**dadurch gekennzeichnet, dass**
der Vermittlungsknoten (VK) dazu ausgebildet ist, einen Austausch der Kennzeichner beim Erhalt einer Nachricht vorzunehmen.

21. Kommunikationssystem nach einem der Ansprüche 9 bis 13,
**dadurch gekennzeichnet, dass**
der Netzwerkknoten (AF, GGSN) dazu ausgebildet ist, eine Request Routing-Nachricht zu erzeugen, wobei zwischen dem Vermittlungsknoten (VK) und dem Netzwerkknoten (AF, GGSN) sowie zwischen dem Netzwerkknoten (AF, GGSN) und dem Kontrollknoten (KK) ausgetauschte Nachrichten unterschiedliche Kennzeichner (Application Identifier) aufweisen.

22. Kommunikationssystem nach Anspruch 21,
**dadurch gekennzeichnet, dass**
der Vermittlungsknoten (VK) beim Empfang der Anfrage-Nachricht des Netzwerkknotens (AF, GGSN) eine an den Netzwerkknoten (AF, GGSN) adressierte Antwort-Nachricht generiert, in welcher der Kontrollknoten (KK) als Ziel der weiteren Kommunikation benannt wird.

23. Kommunikationssystem nach einem der Ansprüche 1 bis 22,
**dadurch gekennzeichnet, dass**
der Vermittlungsknoten (VK) Konfigurationsinformationen über die Zuordnung eines Kommunikationsendgeräts (UE) zu einem Kontrollknoten (KK) verfügt.

24. Kommunikationssystem nach einem der Ansprüche 1 bis 22,
**dadurch gekennzeichnet, dass**
der Vermittlungsknoten (VK) dazu ausgebildet ist, einen Kontrollknoten (KK) für ein Kommunikationsendgerät (UE) auszuwählen.

25. Kommunikationssystem nach Anspruch 24,
**dadurch gekennzeichnet, dass**
eine Auswahl eines Kontrollknotens (KK) durch den Vermittlungsknoten (VK) erfolgt, wenn dem Vermittlungsknoten (VK) der aus einer Anfrage-Nachricht extrahierte, das Kommunikationsendgerät (UE) kennzeichnende Identifier noch nicht bekannt ist.

26. Kommunikationssystem nach Anspruch 24 oder 25,
**dadurch gekennzeichnet, dass**
eine Mehrzahl an Vermittlungsknoten (VK) eine Kommunikationsverbindung zueinander aufweist, um einen Datenaustausch hinsichtlich der dynamisch vorgenommenen Zuordnung der Kommunikationsendgeräte (UE) kennzeichnenden Identifier vornehmen zu können.

27. Kommunikationssystem nach einem der Ansprüche 1 bis 22,
**dadurch gekennzeichnet, dass**
die Kontrollknoten (KK) Kenntnis über die Zuordnung der ihnen zugewiesenen Kommunikationsendgeräte (UE) aufweisen, und diese Information im Rahmen von Capability Exchange-Nachrichten an den Vermittlungsknoten (VK) übertragen.

28. Vermittlungsknoten-Rechner zur Verwendung in einem Kommunikationssystem nach einem der vorherigen Ansprüche,
**dadurch gekennzeichnet, dass**
dieser dazu eingerichtet ist, den für ein betreffendes Kommunikationsendgerät (UE) eines Kommunikationssystems (1) zugeordneten Kontrollknoten (KK) zu bestimmen, so dass die von dem zumindest einen Netzwerkknoten (AF, GGSN) bereitgestellten Informationen an diesen Kontrollknoten (KK) übermittelbar sind.

29. Verfahren zum Verarbeiten einer von einem Netzwerkknoten (AF, GGSN) einem Vermittlungsknoten (VK) zugeführten Nachricht in einem Kommunikationssystem (1) nach einem der Ansprüche 1 bis 17, bei dem der Vermittlungsknoten den für ein betreffendes Kommunikationsendgerät (UE) zugeordneten Kontrollknoten (KK) bestimmt, worauf die die von dem zumindest einen Netzwerkknoten (AF, GGSN) bereitgestellten Informationen an diesen Kontrollknoten (KK) übermittelt werden.
